**Europäisches Patentamt**

**European Patent Office**

**Office européen des brevets**

(19)

(11) Veröffentlichungsnummer : **0 228 396 B2**

(12) **NEUE EUROPÄISCHE PATENTSCHRIFT**

(45) Veröffentlichungstag der neuen Patentschrift :
**01.04.92 Patentblatt 92/14**

(51) Int. Cl.⁵ : **D21F 1/32, D21F 1/70, C02F 1/24, B01D 21/06**

(21) Anmeldenummer : **86903377.9**

(22) Anmeldetag : **16.06.86**

(86) Internationale Anmeldenummer :
**PCT/EP86/00357**

(87) Internationale Veröffentlichungsnummer :
**WO 87/00220 15.01.87 Gazette 87/01**

(54) ANORDNUNG ZUM AUSFLOCKEN VON FLOCKIERBAREN SUBSTANZEN IN SUSPENSIONEN, INSBESONDERE ZUR REINIGUNG DES RÜCKWASSERS VON DEINKING-ANLAGEN FÜR DIE ALTPAPIERAUFBEREITUNG.

(30) Priorität : **24.06.85 CH 2672/85**

(43) Veröffentlichungstag der Anmeldung :
**15.07.87 Patentblatt 87/29**

(45) Bekanntmachung des Hinweises auf die Patenterteilung :
**11.10.89 Patentblatt 89/41**

(45) Bekanntmachung des Hinweises auf die Entscheidung über den Einspruch :
**01.04.92 Patentblatt 92/14**

(84) Benannte Vertragsstaaten :
**AT DE FR SE**

(56) Entgegenhaltungen :
**BE-A- 410 201**
**DE-A- 1 517 666**
**DE-A- 2 713 088**
**DE-C- 697 245**
**FR-A- 1 368 552**
**FR-A- 2 224 413**
**FR-A- 2 268 757**
**GB-A- 2 023 444**
**US-A- 3 552 571**
**US-A- 4 173 532**

(56) Entgegenhaltungen :
Zeitschrift "Chem.-Ing.-Techn. 48" (1976) Seiten 21-26
KROFTA-technische Unterlagen-Bericht 622A 1962

(73) Patentinhaber : **SULZER-ESCHER WYSS GMBH**
**Escher Wyss-Strasse 25 Postfach 1380**
**W-7980 Ravensburg (DE)**

(72) Erfinder : **KLEINSCHNITTGER, Hans, Hermann**
**Angerweg 1**
**W-7981 Berg-Vorberg (DE)**
Erfinder : **BASSLER, Wolfgang**
**Kapplerbergstrasse 1**
**W-7753 Allensbach (DE)**
Erfinder : **KAHMANN, Albrecht**
**Dornierstrasse 19**
**W-7981 Weingarten (DE)**
Erfinder : **SIEWERT, Wolfgang**
**Weinbergstrasse 30**
**W-7980 Ravensburg - Weingartshof (DE)**

(74) Vertreter : **Görg, Klaus, Dipl.-Ing. et al**
**Hoffmann, Eitle & Partner Arabellastrasse 4 (Sternhaus)**
**W-8000 München 81 (DE)**

EP 0 228 396 B2

## Beschreibung

Technisches Gebiet

Die Erfindung betrifft eine Anordnung zum Ausflocken von flockierbaren Substanzen in Suspensionen, insbesondere zur Reinigung des Rückwassers von Deinking-Anlagen für die Altpapieraufbereitung, wobei der Suspension chemische Mittel in einer zum Ausflocken notwendigen Menge sowie Luft zugegeben werden, die gebildeten Flocken in einem Behälter an Luftbläschen angelagert an die Oberfläche aufschwimmen und als Schwimmschlamm abgetrennt werden, eine Transporteinrichtung zum Transport der Schwimmschlammschicht zu einer zentral durch einen Schaft geführten Abführleitung vorhanden ist, wobei die Suspension von einem Reservoir über eine Leitung einem Behälter zuführbar ist, vor dem Behälter Zugabestellen für Flockungsmittel und Luft vorgesehen sind und im Behälter ein Rotor vorgesehen ist, der um einen vertikalen Schaft rotierbar ist, wobei der Rotor zwei sich im wesentlichen horizontal vom Schaft nach außen erstreckende Arme aufweist, wobei die mit Flockungsmitteln und Luft versetzte Suspension über den Schaft dem einen Arm im Behölter zuführbar ist und die von aufgeschwommenen, ausgeflockten Substanzen befreite Flüssigkeit vom anderen Arm über den Schaft abführbar ist.

Eine derartige Anordnung allgemein zur Reinigung von Wasser für die Herstellung von papier ist aus der BE-A-410 201 bekannt.

Eine solche Anordnung wird insbesondere zur Reinigung des Rückwassers von Deinking-Anlagen benötigt. Solche Deinking-Anlagen dienen dazu, Druckfarben vom Altpapier zu trennen und zu entfernen, damit ein sauberer, heller, wieder verwendbarer papierstoff als Rohstoff für Neupapier entsteht. Die Druckfarben werden dabei im Schaum von Flotationsanlagen oder im Filtrat von Waschanlagen abgeschieden. Ein Teil findet sich auch im Filtrat eines eventuell nachgeschalteten Eindickers. Das Wasser an allen diesen Anfallstellen wird aus wirtschaftlichen Gründen teilweise oder ganz rezirkuliert und zur neuen Auflösung von Altpapier wieder verwendet.

Dieses Rückwasser ist jedoch mit Druckfarben, Faserfeinstoffen und anderen Substanzen, die beim Deinking-Verfahren aus dem Altpapier abgetrennt werden, verunreinigt. Der Gehalt an suspendierten Feststoffen kann beispielsweise zwischen 500 und 3500 mg/l liegen. Würde dieses Wasser unbehandelt wieder zur Auflösung von Altpapier verwendet, würde das Altpapier zusätzlich verschmutzt. Das Rückwasser muß daher gereinigt werden.

Stand der Technik

Es ist bekannt, diese Rückwasser-Reinigung durch Zugabe von Chemikalien vorzunehmen und die Fremdstoffe in einem Behälter auszuflocken und abzutrennen, beispielsweise in Flotationsanlagen. In solchen Flotationsanlagen wird dabei Luft zugeführt und im Wasser fein verteilt. Im Behälter schwimmen dann die Feststoffe, von der Luft an die Oberfläche transportiert, als Schwimmschlamm auf und können mit entsprechenden Einrichtungen vom Klarwasser abgeschöpft werden.

Als Chemikalien können dabei verschiedene kationische Mittel und/oder anionische sowie nicht-ionische Chemikalien einzeln oder in Kombination verwendet werden, z.B. Alaun als ein geeignetes, polymeres kationisches Mittel und z.B. Polyacrylamid als zusätzliches anionisches Polymer, oder z.B. hochpolymerische Polyoxiprodukte als nicht-ionische Mittel. Um eine optimale Qualität des gereinigten Rückwassers zu erthalten, ist es nötig, jede einzelne Chemikalie möglichst genau in der zum optimalen Ausflocken der Fremdstoffe notwendigen Menge zuzugeben, d.h. die Chemikalienzugabe jedes einzelnen Mittels darf weder unterdosiert sein, noch überdosiert. Dies läßt sich durch ein Regelverfahren erreichen, indem die Wirkung mittels geeigneter Meßgeräte, beispielsweise Trübungsmesser, an geeigneten Stellen bestimmt wird und mit einer daran angeschlossenen Regeleinrichtung durch Auswertung des gemessenen Trübungsgrades und des Massenflusses einerseits, und der Menge und Konzentration der Chemikalienzugabe andererseits, die Zugabe auf einen optimalen Flockungs- oder Trübungsgrad geregelt wird. Dabei kann die Reinigungswirkung durch Zugabe mehrerer Mittel an verschiedenen Zugabestellen hintereinander weiter verbessert werden.

Bei bekannten Flotationsanlagen war jedoch die Reinigungswirkung im Flotationsbehälter, d.h. das Aufschwimmen der flockierten und an Luftbläschen angelagerten Substanzen und deren Abtrennung vom Klarwasser noch nicht optimal, und die Anlagen mußten daher, um eine genügende Leistung pro Zeiteinheit und einen hinreichenden Durchsatz aufzuweisen, überdimensioniert werden und arbeiteten relativ unwirtschaftlich.

Aus der DE-A-27 13 088 ist eine Anlage zur Abwasserklärung durch Flotation aufgrund von Entspannung gelöster Luft bekannt, bei der duch einen Schlammräumer die Schwimmschlammschicht auf der Flüssigkeitsoberfläche frei abgeschöpft und durch ein schräggestelltes Rohr zentral abgeführt wird. Die Suspension wird von einem Reservoir einem sich drehenden Verteilerarm zugeleitet, der oberhalb der Flüssigkeitsoberfläche angeordnet ist. Von diesem Verteilerrohr bargen über die gesamte Flüssigkeitshöhe im Behälter nach unten Fallrohre, von denen die Suspension in Bewegungsrichtung des Verteilerrohres gegen eine prallwand abgegeben wird, von der die Suspension über die gesamte Höhe der Flüssigkeit im Behälter entgegen der Bewegungsrichtung aus Beruhigungszellen in die Behälterflüssigkeit abgegeben wird. Oberhalb des Bodens des Behälters befinden sich Klarwasserabführrohre, die sich ebenfalls in gleicher Richtung in der Flüssigkeit drehen wie das Verteilerrohr für das zugeführte Abwasser.

Aus der US-A-3 552 571 ist eine Elektroflotationsvorrichtung zur Abwasserreinigung bekannt, bei der die Schlammräumung an der Flüssigkeitsoberfläche innerhalb des Behälters über einen Schlammsammelarm erfolgt, der den Schlamm in stark flüssigem Zustand von der Flüssigkeitsoberfläche in einen Schlammsammelraum schiebt, in dem der Schlamm durch eine Förderschnecke radial nach außen gefördert und dort abgeführt wird.

## Darstellung der Erfindung

Um die genannten Nachteile des Standes der Technik zu beseitigen, setzt die Erfindung sich die Aufgabe, eine Anordnung zum Ausflocken von flockierbaren Substanzen in Suspensionen, insbesondere zur Reinigung des Rückwassers von Deinking-Anlagen für die Altpapieraufbereitung zu schaffen, bei welcher die Flockungswirkung und die Reinigungsleistung im Behälter verbessert ist und einen optimalen Wert erreicht, um einen größeren Durchsatz und eine optimale Wirtschaftlichkeit zu ermöglichen und bei welcher die Entfernung aufgeschwommener, ausgeflockter Substanzen mit größerer Effizienz erreicht werden kann.

Die erfindungsgemäße Anordnung ist dadurch gekennzeichnet, daß der eine Arm, der die mit Flockungsmitteln und Luft versetzte Suspension zuführt, im Behälter unterhalb der Flüssigkeitsoberfläche oder Schwimmschlammschicht und der andere Arm oberhalb des Bodens des Behälters positioniert sind, daß die Transporteinrichtung zum Transport der Schwimmschlammschicht eine Förderschnecke auf einem weiteren radial verlaufenden Arm aufweist, wobei die Förderschnecke in einer radial verlaufenden Wanne angeordnet ist, und daß parallel zur Förderschnecke ein Schaufelrad vorgesehen ist, dessen Flü- gel die Schwimmschlammschicht gegen ein Leitblech anhebt und in die Wanne fördern.

Mit besonderem Vorteil sind die beiden Arme in einem spitzen Winkel zueinander angeordnet, und zwar so, daß der obere Zuführarm dem unteren Abführarm bei Rotation nacheilt, so daß bei jeder Umdrehung des Rotors das Klarwasser abgeführt wird, kurz bevor neue Suspension in den Behälter zugeführt wird.

Besonders zweckmäßig ist es, Meßvorrichtungen im Behälter vorzusehen, die an einem weiteren, mitrotierenden Arm angebracht sind und als Trübungsmesser ausgebildet sein können, und welche das Verhalten der ausgeflockten Substanzen, beispielsweise deren Aufstiegsverhalten oder Abscheidung bestimmen und mittels einer Regelschaltung die Chemikalienzugabe, die Suspensionszuführung oder die Rotationsgeschwindigkeit des Rotors auf eine optimale Reinigungswirkung zu steuern vermögen. Zusätzlich können an verschiedenen Stellen vor dem Behälter noch weitere Meßgeräte zur optimalen Regelung der Chemikalienzugabe vorhanden sein.

## Kurze Beschreibung der Zeichnungen

Die Erfindung wird anhand der in den Figuren dargestellten Ausführungsbeispiele einer Rückwasser-Reinigungsanlage näher erläutert. Es zeigen :

Figur 1 das Schema einer Rückwasser-Reinigungsanlage,
Figur 2 einen darin verwendeten Flotationsbehälter in der Aufsicht,
Figur 3 das Schema einer weiteren Rückwasser-Reinigungsanlage im Schnitt,
Figur 4 eine Fördereinrichtung für Schwimmschlamm,
Figur 5 einen Rotor mit Verteilarm im Längsschnitt, und
Figur 6 einen Querschnitt durch diesen Rotor nach Ebene VI-VI.

## Beschreibung von Ausführungsbeispielen der Erfindung

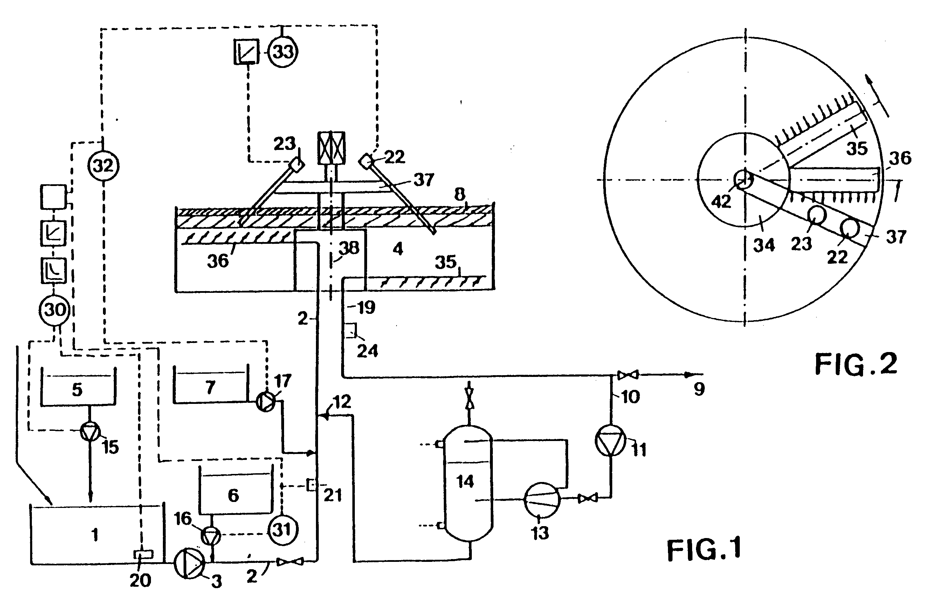

Bei der in Figur 1 dargestellten Anlage wird einem Rohwasserreservoir 1 beispielsweise das Rückwasser einer Deinking-Anlage zugeführt, welches suspendierte Feststoffe in einer Konzentration von etwa 500-1 500 ppm enthalten kann. Das Reservoir 1 ist mit einer Leitung 2, in der eine Pumpe 3 vorgesehen ist, mit einem Behälter 4 verbunden, in den das Rückwasser über einen Arm 36 hineingeführt und das Klarwasser über einen anderen Arm 35 abgeführt wird.

Dem Rückwasser im Reservoir 1 wird über eine steuerbare Pumpe 15 ein kurzkettiges, niedermolekulares, stark kationisches Mittel 5 zur weitgehenden Ladungsneutralisation zugeführt. Dieses Mittel kann beispielsweise aus nieder-molekularem, stark kationischem Polymer, sowie Kombinationen eines solchen Polymers mit mehrwertigen Metallkationen-Verbindungen, z. B. Aluminium-Chlorid oder Aluminium-Oxichlorid bestehen. Die getrennte Zugabe der Metallkationen-Verbindungen ist ebenfalls möglich. Bei genügender Durchmischung des Rückwassers mit dem Mittel kann auf eine Verdünnung bei der Anwendung von Polymer sogar verzichtet werden.

In die Leitung 2 wird nach der Pumpe 3 ein langkettiges, hoch-molekulares kationisches Mittel 6 über eine Pumpe 16 zugeführt. Dieses Mittel 6 bewirkt in der Leitung 2 eine Mikroflockenbildung.

Anschliessend wird kurz vor dem Reinigungsbehälter 4 noch ein hochmolekulares anionisches Mittel 7 über eine Pumpe 17 zugeführt. Dieses weitere Mittel 7 bewirkt nun eine Makroflockenbildung in dem in den behälter 4 einströmenden Rohwasser. Im Behälter 4 werden die flockierten, aufschwimmenden Venunreinigungen als Schwimmschlamm 8 abgeführt und das geklärte Rückwasser als Klarwasser 9 über eine Leitung 19 ebenfalls abgeführt. Ein Teil 10 dieses Klarwassers wird dabei mittels einer Pumpe 11 abgezweigt und in einer Mischeinrichtung 13 mit Luft versetzt und dann über einen Sättigungsbehälter 14 an einer Stelle 12 wieder mit Luft gesättigt in die Zuführleitung 2 eingegeben.

Zur Regelung der optimalen Zugabemenge der verschiedenen Mittel 5, 6 und 7 sind eine Reihe von Messvorrichtungen für charakteristische Eingenschaften des Rückwassers bzw. der durch die einzelnen Chemikalien erzeugten Wirkung vorgesehen und mit Regeleinrichtungen verbunden, welche wiederum die steuerbaren Pumpen 15, 16 und 17 für die Mittelzugabe ansteuern.

Im Rohwasserreservoir 1 ist zunächst ein Ladungsmessgerät 20 vorgesehen, welches die Massenladung in der Suspension misst und über die Regeleinrichtung 30 die Pumpe 15 für die Zugabe des ersten Mittels 5 so steuert, dass eine weitgehende Ladungsneutralisation im Rohwasserreservoir stattfindet. Durch diese Neutralisation wird erreicht, dass der Flockungsvorgang durch Zugabe weiterer, andersartiger Chemikalien überhaupt erst optimal eingestellt werden kann.

Die Wirkung des zweiten Mittels 6, welches zunächst eine Mikroflockenbildung in der Leitung 2 verursacht, wird mittels eines weiteren Messgerätes 21 in der Leitung 2 in gewissem Abstand von der Zugabestelle des zweiten Mittels bestimmt. Bei diesem Messgerät 21 kann es sich beispielsweise um einen Trübungsmesser handeln, oder um ein Gerät zur Messung des Massenflusses, d. h. des Volumens und des Feststoffgehaltes. Dieses Messgerät 21 steuert über eine Regeleinrichtung 31 die steuerbare Pumpe 16 für die Zugabe des zweiten Mittels 6 an und regelt diese auf einen bezüglich der Mikroflockenbildung optimalen Wert.

In Flussrichtung nach dem Messgerät 21, jedoch noch vor dem Behälter 4, wird in die Leitung 2 das dritte Mittel 7 zugegeben, das eine Makroflockenbildung bewirkt. Das Aufschwimmverhalten der ausgeflockten Fremdstoffe im Behälter 4 durch die Anlagerung der Luft wird mit wenigstens einem weiteren Messgerät 22 gemessen, welches beispielsweise ebenfalls als Trübungsmesser ausgebildet ist. Dieses Gerät 22 befindet sich in gewissem Abstand vom Einlauf in den Behälter 4, um eine Veränderung im Aufstiergsverhalten der Flocken messen zu können, z. B. an einer Stelle, an der die Abscheidung der Feststoffe einen bestimmten Wert erreicht, z. B. mindestens 10 %. Dieses Messgerät 22 steuert über eine Regelschaltung 32 die steuerbare Pumpe 17 an und dosiert die Zugabe des dritten Mittels 7 so, dass auch die Klärwirkung im Behälter 4 optimal eingestellt wird.

Im Behälter 4 kann noch ein weiterer, ähnlich aufgebauter Trübungsmesser 23 vorgesehen sein, mit dem noch weitere Informationen über das Verhalten der gebildeten Flocken gewonnen werden können, beispielsweise durch Beobachtung des Zeitverlaufs der Klärung. Die beiden Trübungsmesser 22 und 23 können dabei die Trübung in verschiedenem Abstand vom Einlauf des Rohwassers in den Behälter 4 angebracht sein und den Trübungsgrad ausserdem in verschiedener Höhe im Behälter 4 bestimmen. Mittels der Regelschaltung 33 kann auch auf diese Weise ein Mittel, z. B. das Mittel 7, mit Hilfe der Pumpe 17 dosiert werden. Stattdessen kann dazu jedoch auch ein weiteres Trübungsmessgerät 24 in der Klarwasserleitung 19 dienen, dessen Messwert in der gleichen Weise mit dem Messwert des Geräts 22 verglichen wird.

Der in Figur 1 in aufgeklapptem Zustand im Schnitt und in Figur 2 in Aufsicht dargestellte Behälter 4 ist mit Vorteil als zylindrische Wanne mit einigen Metern Durchmesser ausgebildet, in der ein Rotor um eine vertikale Achse 38 so langsam rotiert, dass die Klärwirkung nicht beeinträchtigt wird, z. B. mit einer Umdrehung in etwa 15 Minuten. Vom Schaft 34 um die Achse 38 erstrecken sich die horizontal mehrere Arme 35, 36, 37 mit über ihre gesamte Länge vom Schal bis zum Ende verteilten Oeffnungen nach aussen. Mit einem in Bewegungsrichtung vorangehenden Arm 35 wird das Klarwasser vom Boden abgeschöpft und mit einem in spitzem Winkel folgenden Arm 36 Rohwasser, vorzugsweise in etwas geringerer Tiefe unterhalb der Flüssigkeitsoberfläche oder der Schwimmschlammschicht 8 zugeführt. Der letzte Arm 37 trägt die beiden Trübungsmesser 22 und 23, die die Trübung in verschiedenem Abstand vom Einlauf 36 und gegebenenfalls zusätzlich in verschiedener Tiefe messen.

Mittels dieser Messgeräte 22, 23 kann, wie bereits erwähnt, die Dosierung der Chemikalienzugabe gesteuert werden, und gegebenenfalls auch über die Pumpe 3 die Menge der pro Zeiteinheit dem Behälter 4 zugeführten Suspension oder auch die Rotationsgeschwindigkeit des gesamten Rotors um die Achse 38. Die Reinigungsanlage kann dabei so gesteuert werden, dass über den Arm 36 erst dann neue, mit Flockungsmitteln und Luft versehene Suspension zugeführt wird, wenn die Reinigungswirkung an dieser Stelle, d. h. das Ausflocken und Aufschwimmen der abzutrennenden Fremdstoffe bereits so weit fortgeschritten ist, dass vom unmittelbar vorangehenden Arm 35 am Boden des Behälters 4 relativ klares Wasser abgeschöpt werden kann. Der Zuführarm 36 ist dabei höchstens in der gleichen Tiefe im Behälter 4 angeordnet wie die Abführarm 35, vorzugsweise jedoch in geringerer Tiefe so dass vom Abführarm keine aufschwimmenden Flocken erfasst werden. Damit wird die Reinigungswirkung und die Wirtschaftlichkeit der Anlage optimal.

Die Entfernung aufgeschwommener, ausgeflockter Substanzen kann mit großer Effizienz durch zusätzliche Fördereinrichtungen, wie Schaufelräder, Transportschnecken, welche den Schwimmschlamm in Richtung auf eine Abführleitung transportieren, erreicht werden.

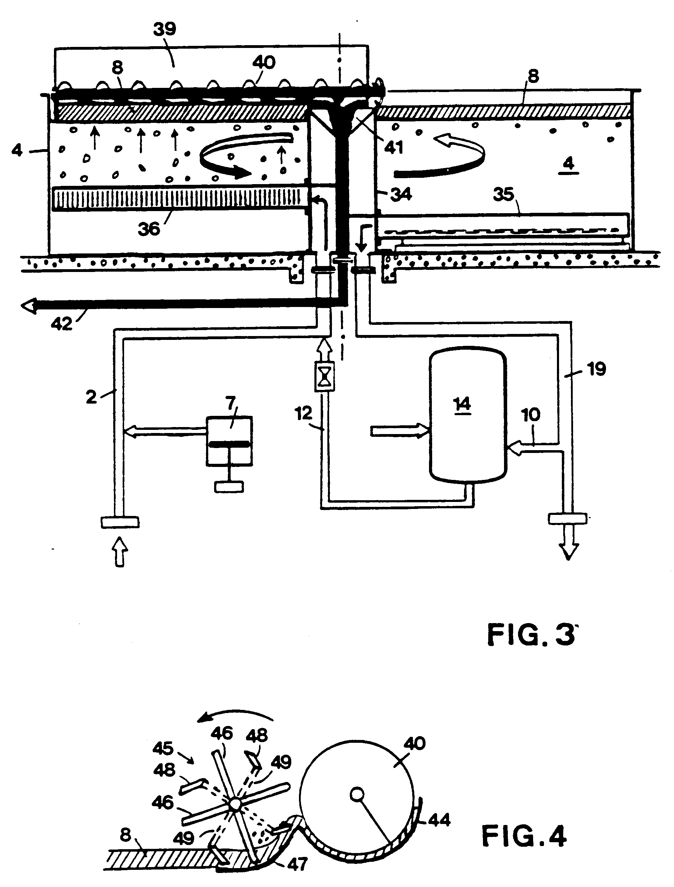

Figur 3 zeigt eine solche besonders vorteilhafte Reinigungsanlage im Schnitt. Hierbei wird dem Schaft 34 im Behälter über eine Zuführleitung 2 die mit Flockungsmittel 7 vertzte Suspension zugeführt und in den höher gelegenen, nacheilenden Arm 36 verteilt. Das Klarwasser wird vom tiefer gelegenen Arm 35 über eine weitere Bohrung des Schaftes 34 der Klarwasserleitung 19 zugeführt. Wiederum wird ein Teil 10 dieses Klarwassers über einen Sättigungsbehälter 14 mit Luft gesättigt und über die Leitung 12 in die Zuführleitung 2 eingegeben. Die auf der Flüssigkeitsoberfläche im Behälter 4 aufschwimmende Schwimmschlammschicht 8 wird mittels einer, an einem weiteren, mitrotierenden Arm 39 an der Welle 34 befestigten Förderschnecke 40 nach innen transportiert und in einen Trichter 41 einer zusätzlichen zentralen Bohrung 43 des Schaftes 34 eingeführt und über eine Schlammleitung 42 nach aussen abgeführt.

Figur 4 zeigt die Ausbildung der Fördereinrichtung, welche insbesondere zur Entfernung von relativ dickem und steifem Schwimmschlamm geeignet ist. Dabei ist die Förderschnecke 40 in einer Wanne 44 in der Form einer Zylinderhalbschale angeordnet, in welcher der Schwimmschlamm mittels der Schnecke 40 in Richtung zum Zentrum transportiert wird. Die Kanten dieser Wanne 44 liegen oberhalb der Schwimmschlammschicht 8. Um den Schwimmschlamm in diese Wanne 44 hinein zu bewegen, ist parallel zur Förderschnecke 40 ein Flügelrad 45 vorgesehen, welches mehrere flache, sich über die gesamte Breite des Armes erstreckende Flügel 46 aufweist. Dieses Schaufelrad 45 bzw. dessen Flügel 46 laufen in einem Leitblech 47 um und heben dabei die Schwimmschlammschicht 8 an und leiten sie in die Wanne 44. Um auch relativ steife Schwimmschlammschichten 8 anheben zu können, ist es zweckmässig, zwischen den Flügeln 46 schräggestellte Schaufeln 48 vorzusehen, welche den Schwimmschlamm auflockern. Durch Oeffnungen zwischen den Haltestegen 49 der Schaufeln 48 fällt der aufgelockerte Schwimmschlamm auf die Flügel 46 und wird von diesen in die Wanne 44 transportiert.

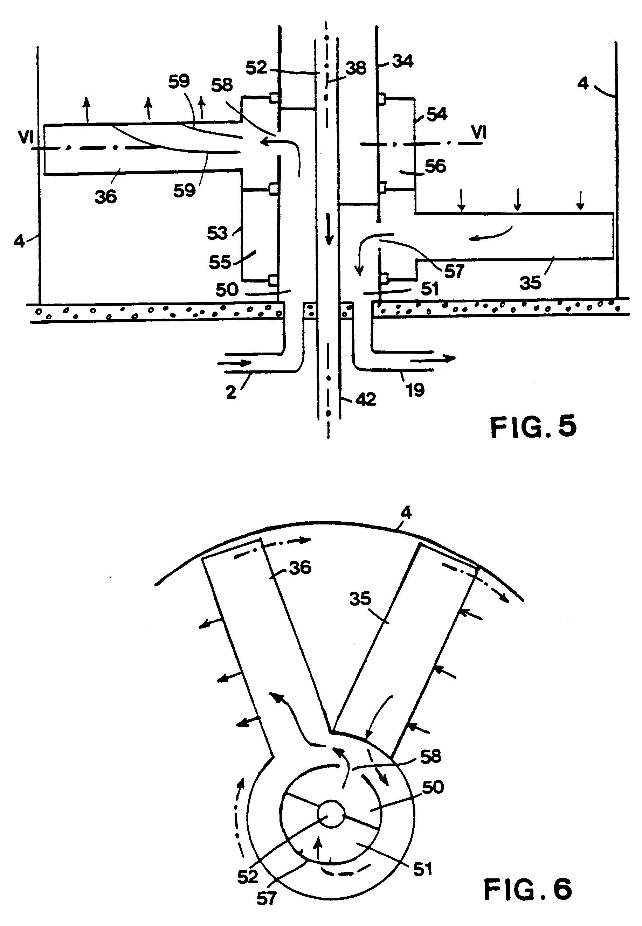

Figuren 5 und 6 zeigen einen Rotor mit einem Schaft 34 und Verteilarmen 35 und 36 im Längsschnitt und im Querschnitt. Hierbei sind im feststehenden Schaft 34 ein Zuführkanal 50 für die Suspension, ein Abführkanal 51 für Klarwasser und ein Abführkanal 52 für den abgeschöpften Schwimmschlamm vorgesehen. Der Schaft 34 ist von zwei Manschetten 53 und 54 umschlossen, an denen die Arme 35 und 36 angebracht sind und welche mit den Armen zusammen umlaufen. Diese Manschetten 53 und 54 sind gegen den Schaft 34 abgedichtet und lassen um den Schaft 34 herum jeweils einen ringförmigen Raum 55 bzw. 56 frei, in den das Klarwasser vom Arm 35 durch eine Oeffnung 57 in den Kanal 51 abgeführt bzw. die Suspension über den Kanal 50 durch eine Oeffnung 58 des Schaftes 34 hineingeführt und in den Arm 36 verteilt werden kann. Die ringförmigen Räume 55 und 56 innerhalb der Manschetten 53 und 54 erlauben also eine Verteilung der Flüssigkeit bezüglich der Arme 35 und 36 bei jeder beliebigen Winkelstellung. Um eine gleichmässige Verteilung in den Suspensions-Zuführarm 36 bei allen Stellungen zu gewährleisten, ist es zweckmässig, innerhalb dieses Armes geeignet geformte Leitflächen 59 vorzusehen. Die beiden Manschetten 53 und 54 können eng benachbart oder zu einer mechanischen Einheit vereinigt sein, so dass der Abführarm 35 für das Klarwasser etwas tiefer liegt als der Suspensions-Zuführarm 36 und somit praktisch keine ausgeflockten, in der Regel aufsteigenden Fremdstoffe erfasst. Auf diese Weise wird eine besonders gute Wirksamkeit und Wirtschaftlichkeit der Reinigungsanlage erreicht.

**Patentansprüche**

1. Anordnung zum Ausflocken von flockierbaren Substanzen in Suspensionen, insbesondere zur Reinigung des Rückwassers von Deinking-Anlagen für die Alprapieraufbereitung, wobei der Suspension chemische Mittel in einer zum Ausflocken notwendigen Menge sowie Luft zugegeben werden, die gebildeten Flocken in einem Behälter an Luftbläschen angelagert an die Oberfläche aufschwimmen und als Schwimmschlamm abgetrennt werden, eine Transporteinrichtung zum Transport der Schwimmschlammschicht (8) zu einer zentral durch einen Schaft (34) geführten Abführleitung (41) vorhanden ist, wobei die Suspension von einem Reservoir (1) über eine Leitung (2) einem Behälter (4) zuführbar ist, vor dem Behälter (4) Zugabestellen für Flockungsmittel und Luft vorgesehen sind und im Behälter (4) ein Rotor vorgesehen ist, der um einen vertikalen Schaft (34) rotierbar ist, wobei der Rotor zwei sich im wesentlichen horizontal vom Schaft nach außen erstreckende Arme (35, 36) aufweist, wobei die mit Flockungsmitteln und Luft versetzte Suspension über den Schaft (34) dem einen Arm (36) im Behälter (4) zuführbar ist und die von aufgeschwommenen, ausgeflockten Substanzen befreite Flüssigkeit vom oberhalb des Bodens des Behälters (4) positionierten anderen Arm (35) über den Schaft (34) abführbar ist und wobei die Transporteinrichtung ebenfalls mit dem Rotor umläuft, dadurch **gekennzeichnet**, daß der eine Arm (36), der die mit Flockungsmitteln und Luft versetzte Suspension zuführt, im Behälter (4) unterhalb der Flüssigkeitsoberfläche oder Schwimmschlammschicht (8) positioniert ist, daß die Transporteinrichtung zum Transport der Schwimmschlammschicht (8) eine Förderschnecke (40) auf einem weiteren radial verlaufenden Arm (39) aufweist, wobei die Förderschnecke (40) in einer radial verlaufenden Wanne (44) angeordnet ist, und daß parallel zur Förderschnecke (40) eine Schaufelrad (45) vorgesehen ist, dessen Flügel (46) die Schwimmschlammschicht (8) gegen ein Leitblech (47) anhebt und in die Wanne (44) fördern.

2. Anordnung nach Anspruch 1, dadruch gekennzeichnet, daß auf den beiden Armen (35, 36) über die gesamte Länge Zuführöffnungen bzw. Abführöffnungen von dem Schaft (34) bis zum äußeren Ende vorgesehen sind.

3. Anordnung nach einem der Ansprüche 1 bis 2, dadurch gekennzeichnet, daß die beiden Arme (35, 36) in einem spitzen Winkel zueinander angeordnet sind, so daß der obere Arm (36), über den die Suspension zugeführt wird, dem unteren Arm (35), über den das Klarwasser abgeführt wird, bei Rotation nacheilt.

4. Anordnung nach einem der Ansprüche 1 bis 3, dadruch gekennzeichnet, daß wenigstens eine Meßvorrichtung (22, 23) zur Messung einer Eigenschaft der ausgeflockten Substanzen im Behälter (4) vorgesehen ist.

5. Anordnung nach Anspruch 4, dadurch gekennzeichnet, daß wenigstens zwei Meßvorrichtungen (22, 23) vorgesehen sind, welche eine Eigenschaft der ausgeflockten Substanzen in verschiedener Höhe im Behälter (4) bestimmen.

6. Anordnung nach Anspruch 4 oder 5, dadurch gekennzeichnet, daß die Meßvorrichtung (22, 23) als Trübungsmesser ausgebildet sind.

7. Anordnung nach einem der Ansprüche 4 bis 6, dadurch gekennzeichnet, daß an die Meßvorrichtung (22, 23) eine Regelschaltung (32) angeschlossen ist, welche die Zugabe eines Flockungsmittels steuert.

8. Anordnung nach Anspruch 7, dadurch gekennzeichnet, daß die Regelschaltung zusätzlich die Menge der über die Leitung (2) zugeführten Suspension pro Zeiteinheit und/oder die Rotationsgeschwindigkeit des Rotors (35, 36) zu steuern vermag.

9. Anordnung nach einem der Ansprüche 1 bis 8, dadurch gekennzeichnet, daß die Arme (35, 36) an einer mitrotierenden Manschette (53, 54) angebracht sind, die einen feststehenden Schaft (34) dichtend umschließt, und einen ringförmigen Raum (55, 56) um den Schaft herum bildet, wobei der Schaft (34) im Bereich der Manschette (53, 54) eine Öffnung (57, 58) aufweist, durch welche ein Kanal (50, 51) zum Abführen bzw. Zuführen von Flüssigkeit mit dem ringförmigen Raum (55, 56) und dem Inneren des Armes (35, 36) in Verbindung steht.

## Claims

1. An arrangement for flocculating flocculable substances in suspensions, in particular for purifying the recirculated water of de-inking plants for waste paper processing, wherein chemical agents in a quantity necessary for flocculation and also air are added to the suspension, the flakes formed float to the surface, attached to air bubbles, in a container and are separated off as a scum, a transport device for transporting the scum layer (8) to a discharge pipe (41) which is guided centrally through a shaft (34) is provided, wherein the suspension can be supplied from a reservoir (1) through a line (2) to a container (4), addition points for flocculants and air are provided before the container (4) and a rotor which is rotatable about a vertical shaft (34) is provided in the container (4), the rotor having two arms (35, 36) extending substantially horizontally outwards from the shaft, the suspension with flocculants and air added thereto being able to be supplied via the shaft (34) to one arm (36) in the container (4), and the liquid which has been freed from floating flocculated substances being able to be removed by the other arm (35) positioned above the base of the container (4) via the shaft (34), and the transport device likewise rotating with the rotor, characterised in that one arm (36) which suppplies the suspension with flocculants and air added thereto is positioned in the container (4), beneath the surface of the liquid or the layer of scum (8), that the transport device for transporting the sludge layer (8) has a worm conveyor (40) on an additional radially extending arm (39), the worm conveyor (40) being disposed in a radially extending trough (44), and that a bucket wheel (45) is provided parallel to the worm conveyor (40), the blades (46) of which wheel lift the scum layer (8) against a guide plate (47) and convey it into the trough (44).

2. An arrangement according to Claim 1, characterised in that on both arms (35, 36) supply openings and removal openings are provided over the entire length from the shaft (34) to the outer end.

3. An arrangement according to one of Claims 1 to 2, characterised in that the two arms (35, 36) are arranged at an acute angle to each other, so that upon rotation the upper arm (36), via which the suspension is supplied, follows behind the lower arm (35), via which the clear water is removed.

4. An arrangement according to one of Claims 1 to 3, characterised in that at least one measuring device (22, 23) for measuring a property of the flocculated substances is provided in the container (4).

5. An arrangement according to Claim 4, characterised in that at least two measuring devices (22, 23) are provided which determine a property of the flocculated substances at different levels in the container (4).

6. An arrangement according to Claim 4 or 5, characterised in that the measuring devices (22, 23) are designed as turbidimeters.

7. An arrangement according to one of Claims 4 to 6, characterised in that a control circuit (32) which controls the addition of a flocculant is connected to the measuring device (22, 23).

8. An arrangement according to Claim 7, characterised in that the control circuit is additionally capable of controlling the rate of the suspension per unit of time which is supplied via the line (2) and/or the speed of rotation of the rotor (35, 36).

9. An arrangement according to one of Claims 1 to 8, characterised in that the arms (35, 36) are attached to a co-rotating collar (53, 54) which sealingly surrounds a fixed shaft (34), and forms an annular space (55, 56) around the shaft, the shaft (34) having in the region of the collar (53, 54) an opening (57, 58) through which a channel (50, 51) for removing or supplying liquid communicates with the annular space (55, 56) and the interior of the arm (35, 36).

## Revendications

1. Agencement de floculation de substances floculables en suspension, en particulier pour l'épuration des effluents d'installations de désencrage pour le traitement de vieux papiers, dans lequel sont ajoutés à la suspension des agents chimiques en quantité nécessaire pour la floculation, ainsi que de l'air, les flocules formés dans un récipient se fixant sur des petites bulles d'air et montant à la surface et étant séparés sous la forme d'une boue surnageante, un dispositif de transport étant présent pour le transport de la couche de boue surnageante (8) vers une conduite d'évacuation (41) passant dans l'axe d'un fût (34), la suspension pouvant être apportée à partir d'un réservoir (1) par une conduite (2) à un récipient (4), des postes d'alimentation en agents de floculation et en air étant prévus en avant du récipient (4), et un rotor étant prévu dans le récipient (4) en étant rotatif autour d'un fût vertical (34), le rotor présentant deux bras (35,36) qui s'étendent sensiblement horizontalement à partir du fût vers l'extérieur, la suspension mélangée aux agents de floculation et à l'air pouvant être amenée à travers le fût (34) à un (36) des bras dans le récipient (4), et le liquide débarrassé des substances floculées et entraînées en surface pouvant être évacué à travers le fût (34) par l'autre bras (35) positionné au-dessus du fond du récipient (4), tandis que le dispositif de transport tourne, lui aussi, avec le rotor, **caractérisé** en ce que le bras (36), qui apporte la suspension mélangée aux agents de floculation et à l'air, est positionné dans le récipient (4) sous la surface du liquide ou sous la couche de boue surnageante (8), en ce que le dispositif de transport de la couche de boue surnageante (8) présente une vis transporteuse (40) sur un autre bras (39) s'étendant radialement, la vis transporteuse (40) étant disposée dans une auge (44) qui **s**'étend radialement, et en ce qu'une roue à palettes (45) est prévue parallèlement à la vis transporteuse (40), les palettes (46) de ladite roue soulevant la couche de boue surnageante (8) contre une tôle de guidage (47) et l'entraînant dans l'auge (44).

2. Agencement selon la revendication 1, caractérisé en ce que sur les deux bras (35, 36) sont prévues sur toute la longueur, des ouvertures d'alimentation ou des ouvertures d'évacuation s'étendant à partir du fût (34) jusqu'à l'extrémité extérieure.

3. Agencement selon une des revendications 1 ou 2, caractérisé en ce que les deux bras (35, 36) sont disposés en formant entre eux un angle aigu, de telle sorte que le bras supérieur (36) par lequel est apportée la suspension est décalé en arrière, lors de la rotation, par rapport au bras inférieur (35) par lequel est évacuée l'eau clarifiée.

4. Agencement selon une des revendications 1 à 3, caractérisé en ce qu'il est prévu au moins un dispositif de mesure (22, 23) pour mesurer une propriété des substances séparées par floculation dans le récipient (4).

5. Agencement selon la revendication 4, caractérisé en ce qu'il est prévu au moins deux dispositifs de mesure (22, 23) qui déterminent une propriété des substances séparées par floculation, à différentes hauteurs dans le récipient (4).

7

6. Agencement selon la revendication 4 ou 5, caractérisé en ce que le dispositif de mesure (22, 23) est un turbidimètre.

7. Agencement selon une des revendications 4 à 6, caractérisé en ce qu'un circuit de régulation (32) est relié au dispositif de mesure (22, 23) et commande l'apport d'un agent de floculation.

8. Agencement selon la revendication 7, caractérisé en ce que le circuit de régulation peut commander en outre la quantité de suspension introduite par unité de temps à travers la conduite (2), et/ou la vitesse de rotation du rotor (35, 36).

9. Agencement selon une des revendications 1 à 8, caractérisé en ce que les bras (35, 36) sont montés sur un manchon (53, 54) co-rotatif, qui entoure de façon étanche un fût fixe (34) et forme autour du fût une chambre annulaire (55, 56), tandis que le fût (34) présente dans la zone du manchon (53, 54) une ouverture (57, 58) par laquelle un canal (50, 51) pour l'évacuation ou l'apport de liquide communique avec la chambre annulaire (55, 56) et avec l'intérieur du bras (35, 36).

FIG.2

FIG.1

EP 0 228 396 B2

FIG. 3

FIG.4

FIG. 5

FIG. 6